# FASCICULE DE BREVET EUROPEEN

(11) **EP 2 658 692 B1**
(45) Date de publication et mention de la délivrance du brevet: **02.03.2016**
(21) Numéro de dépôt: 11811353.9
(22) Date de dépôt: 28.12.2011
(51) Int. Cl.: B27K 3/15, B27K 3/34, B67B 1/03, C09D 163/00, C08L 79/02, C08L 97/00, B27K 7/00

(54) **DISPOSITIF POUR LE TRAITEMENT DE SURFACE D'UN BOUCHON EN LIEGE, PROCEDE DE TRAITEMENT ET BOUCHON OBTENU PAR CE PROCEDE**
VORRICHTUNG ZUR OBERFLÄCHENBEHANDLUNG EINES KORKENSTÖPSELS, BEHANDLUNGSVERFAHREN UND MIT DIESEM VERFAHREN HERGESTELLTER STÖPSEL
DEVICE FOR TREATING THE SURFACE OF A CORK PLUG, TREATMENT METHOD AND PLUG OBTAINED BY SAID METHOD

(30) Priorité: 29.12.2010 FR 1005158
(43) Date de publication de la demande: 06.11.2013
(73) Titulaire: C2M Aurochs Industrie, 31140 Aucamville (FR)
(72) Inventeur: CARPENTIER, Fanny, F-31200 Toulouse (FR); DE ZOTTI, Guy, F-82700 Montech (FR); AYMARD, Frédéric, F-31780 Castelginest (FR)
(74) Mandataire: Cabinet BARRE LAFORGUE & associés
(86) Numéro de dépôt international: PCT/EP2011/074177
(87) Numéro de publication internationale: WO 2012/089775

(56) Documents cités:
- EP-A1- 0 403 400
- EP-A2- 1 498 449
- BE-A- 692 941
- FR-A1- 2 556 735

## Description

L'invention concerne un dispositif pour le traitement de surface -notamment d'enrobage- d'un bouchon à base de liège -par exemple, d'un bouchon en liège massif et/ou en liège micro-aggloméré-, un procédé de traitement de surface -notamment d'enrobage- d'un tel bouchon à base de liège utilisant ce dispositif de traitement et un bouchon à base de liège enrobé obtenu par un tel procédé.

On sait qu'il est avantageux de traiter la surface extérieure d'un bouchon en liège pour obtenir un bouchage amélioré de flacons -notamment de bouteilles en verre- contenant une solution hydro-alcoolique, notamment un alcool fort (eau-de-vie), ou un vin tranquille -en particulier un vin de garde-, ou un vin effervescent -notamment un vin élaboré « à la méthode champenoise »-, ou un vin pétillant contenant entre 2 % et 3 % d'alcool. Un tel bouchon en liège est étanche aux liquides et présente, le cas échéant, une perméabilité sélective aux liquides et aux gaz.

Pour ce faire, il a déjà été proposé d'utiliser des compositions de paraffine -en particulier des compositions de paraffine présentant une température de fusion de l'ordre de 51°C-. De telles compositions de paraffine ne sont pas adaptées pour pouvoir être utilisées dès lors que la bouteille est chauffée pour permettre son bouchage -aussi appelé thermolisation- notamment par chauffage des mors de la boucheuse.

De tels bouchons paraffinés ne sont pas adaptés pour pouvoir être exposés ou stockés, avant ou après bouchage, au soleil ou à la chaleur. Ils ne présentent pas non plus une résistance mécanique à l'abrasion suffisante, y compris à température ambiante, pour permettre leur utilisation dans une chaine automatisée de mise en bouteille dans laquelle les bouchons paraffinés sont malaxés pour permettre leur présentation dans la boucheuse.

L'utilisation de compositions de silicone pour l'enrobage de bouchon en liège a aussi été proposée. La couche de surface extérieure de tels bouchons enrobés de silicone ne confère à de tels bouchons enrobés de silicone ni des propriétés d'extraction facilitée ni une protection à l'encontre de la migration des tanins et de la coloration des alcools forts.

On connaît aussi de FR 2 637 833 une composition pour le revêtement de produits en liège -notamment des bouchons et des plaques-comprenant une résine de copolymère comprenant du polychlorure de vinyle et de l'alcool polyvinylique dans un solvant mixte qui représente, en volume, au moins 84 % de ladite composition. L'application d'une telle composition pour le revêtement de bouchons en liège nécessite, pour le séchage de cette composition, l'évaporation du solvant mixte. Une telle composition n'est pas exempte de composés organiques volatils (COV). En particulier, elle est susceptible de contaminer la solution hydro-alcoolique avec de tels COV.

On connait aussi des matières plastiques thermodurcissables époxydiques comprenant au moins une résine époxy, un durcisseur et des additifs choisis parmi les diluants réactifs, les solvants, les agents de flexuosité et les charges.

De telles matières plastiques thermodurcissables sont connues pour leurs propriétés d'adhésion sur les métaux, le plastique, le caoutchouc, le bois, le verre, la céramique et le béton et pouvoir être utilisées à titre de revêtement de boites de conserve, de réservoirs métalliques ou en béton et de citernes. Elles ne sont pas adaptées pour le traitement de surface du liège et ne permettent pas de conférer au liège -notamment aux bouchons en liège- une résistance chimique aux solutions hydro-alcooliques -notamment à forte teneur alcoolique-. Elles ne permettent pas non plus de préserver la solution hydro-alcoolique vis-à-vis de la migration des tanins du liège des bouchons en liège et de la coloration de ladite solution hydro-alcoolique par ces tanins.

Le document EP-A-0403400 décrit le traitement du liège par des compositions comprenant des composés époxydes et du sulfate de baryum.

L'invention vise donc à pallier l'ensemble des inconvénients ci-dessus mentionnés.

L'invention vise en particulier à proposer un dispositif pour le traitement de surface d'un bouchon en liège adapté pour permettre la préparation extemporanée d'un mélange liquide pour le traitement de surface d'au moins un bouchon en liège.

Dans toute la suite, un dispositif pour le traitement de surface d'un bouchon en liège désigne l'ensemble des éléments nécessaires à la préparation d'un mélange de traitement de surface d'un bouchon en liège selon l'invention. Un tel dispositif peut être un « nécessaire » de traitement ou un « kit » de traitement.

L'invention vise un tel dispositif comprenant deux compositions liquides distinctes adaptées pour pouvoir être préparées, conditionnées et conservées séparément l'une de l'autre à l'état liquide, puis pour pouvoir être mélangées l'une avec l'autre et pour former un mélange de traitement -notamment d'enrobage- liquide de bouchons en liège.

L'invention vise en particulier à proposer un tel dispositif pour le traitement de surface d'un bouchon en liège adapté pour permettre la formation d'un film de protection polymérisé de grande résistance chimique et mécanique en surface dudit bouchon en liège. En particulier, un tel film de protection est adapté pour ne pas altérer les propriétés organoleptiques de la solution hydro-alcoolique contenue dans un flacon bouché par ledit bouchon en liège.

L'invention vise donc à proposer un tel dispositif adapté pour permettre la formation d'un film de protection polymérisé ne libérant sensiblement aucun composé organique volatil susceptible de contaminer la solution hydro-alcoolique et satisfaisant aux normes relatives aux matériaux susceptibles d'entrer en contact avec des denrées alimentaires, notamment dans le cadre d'une utilisation à température ambiante.

L'invention vise aussi à proposer un tel dispositif adapté pour permettre l'obtention d'un film de protection polymérisé qui soit stable dans le temps et au contact d'une solution hydro-alcoolique -notamment au contact d'un vin tranquille ou d'une solution hydro-alcoolique à forte teneur alcoolique, aussi appelé alcool fort-.

L'invention vise aussi à proposer un tel dispositif adapté pour permettre l'obtention d'un film de protection polymérisé qui présente une grande résistance chimique vis-à-vis d'une solution hydro-alcoolique -notamment d'une eau de vie-.

L'invention vise aussi à proposer un tel dispositif adapté pour permettre l'obtention d'un film de protection polymérisé qui présente une grande résistance chimique vis-à-vis d'un vin sucré (c'est-à-dire présentant une teneur en sucre pouvant aller jusqu'à 60 g/L de vin)) et acide (pH de l'ordre de 3), qui sont connus pour altérer la colle constitutive de bouchons en liège agglomérés et les revêtements connus des bouchons en liège naturel non reconstitué.

En particulier, l'invention vise à proposer un tel dispositif adapté pour permettre la formation d'un film de protection polymérisé adapté pour s'opposer à -notamment empêcher- la migration des tanins du liège vers la solution hydro-alcoolique -notamment vers une eau de vie blanche- et la coloration de cette dernière.

L'invention vise aussi un tel dispositif pour le traitement de surface d'un bouchon en liège adapté pour permettre l'obtention d'un bouchon en liège enrobé présentant une extraction facilitée lors du débouchage de la bouteille en verre. L'invention vise plus particulièrement un tel dispositif pour le traitement de surface d'un bouchon en liège adapté pour permettre l'obtention d'un bouchon en liège enrobé nécessitant, pour son extraction, l'application d'une force qui soit comprise entre environ 150 N et 500 N (entre environ 15 et 50 kilogramme-force, kgf) -notamment entre 200 N et 400 N (entre environ 20 et 40 kilogramme-force, kgf)-préconisée pour l'extraction de bouchons de forme et de dimensions différentes.

L'invention vise aussi à proposer un tel dispositif pour le traitement de surface d'un bouchon en liège adapté pour permettre la formation, à l'état polymérisé en surface du bouchon en liège, d'un film de protection translucide -en particulier, sensiblement transparent-.

L'invention vise en outre à proposer un tel dispositif pour le traitement de surface d'un bouchon en liège adapté pour former un mélange de traitement présentant, à l'état mélangé non polymérisé, une viscosité adaptée pour permettre un enrobage et une répartition homogène du mélange de traitement en surface des bouchons en liège.

L'invention vise aussi à proposer un tel dispositif pour le traitement de surface d'un bouchon en liège adapté pour permettre la formation d'un film de protection d'un bouchon en liège par polymérisation de composés du mélange de traitement quelles que soient les conditions atmosphériques d'hygrométrie.

L'invention vise à proposer un tel dispositif pour le traitement de traitement de surface d'un bouchon en liège adapté pour permettre l'obtention d'un film de protection d'une grande souplesse, et qui soit en particulier non cassant.

L'invention vise aussi à proposer un tel dispositif pour la production de bouchons en liège enrobés qui présentent une résistance à l'abrasion accrue par rapport au bouchons en liège enrobés de l'état de la technique et qui sont compatibles avec un bouchage sur une chaine de bouchage automatisée.

L'invention vise aussi à proposer un tel dispositif pour le traitement de surface d'un bouchon en liège adapté pour permette l'obtention d'un tel film de protection présentant une résistance à l'arrachement accrue par rapport à un revêtement de bouchon en liège de l'état de la technique.

L'invention vise aussi à proposer un tel dispositif pour le traitement de surface d'un bouchon en liège qui soit exempt de solvant -notamment de solvant organique- volatil susceptible d'être libéré avant polymérisation et/ou après polymérisation du mélange de traitement.

L'invention vise donc à proposer un tel dispositif de traitement qui respecte l'environnement.

L'invention vise aussi à proposer un tel dispositif de traitement qui respecte les propriétés organoleptiques et visuelles de la solution hydro-alcoolique.

L'invention vise aussi à proposer un tel dispositif de traitement dont l'utilisation satisfait la réglementation relative au respect des conditions de travail des personnels.

L'invention vise également à atteindre tous ces objectifs en proposant un tel dispositif de traitement de surface extérieure -en particulier d'enrobage- d'un bouchon en liège qui soit économiquement acceptable.

L'invention vise en particulier à proposer un tel dispositif de traitement de surface d'un bouchon en liège adapté pour pouvoir permettre la préparation extemporanée d'un mélange de traitement de surface prêt à l'emploi susceptible d'être solubilisé en vue de son rinçage -notamment par l'alcool éthylique- avant son séchage par polymérisation.

L'invention vise aussi à proposer un procédé de traitement de surface extérieure d'un bouchon en liège dans lequel on utilise un dispositif de traitement selon l'invention.

L'invention vise également à proposer un procédé pour le traitement de surface d'un bouchon en liège à température ambiante qui soit simple dans sa mise en oeuvre et ne nécessite pas l'utilisation de moyens de chauffage spécifiques.

L'invention vise aussi un tel procédé adapté pour pouvoir être utilisé pour le traitement de la surface extérieure d'un bouchon en liège. En particulier, l'invention vise un tel procédé permettant le traitement d'un bouchon en liège présentant, avant ledit traitement de surface un marquage distinctif -notamment une mention, un logo et/ou au moins un caractère- et sans détérioration ni masquage dudit marquage distinctif.

L'invention vise de surcroît à proposer un tel procédé qui préserve les habitudes de travail des personnels et n'implique pour sa mise en oeuvre que peu de manipulations.

L'invention vise aussi un tel bouchon en liège enrobé présentant d'une part des propriétés d'inertie chimique vis-à-vis d'une solution hydro-alcoolique contenue dans un flacon à boucher et des propriétés mécaniques d'extraction améliorées et d'autre part qui préserve les aspects esthétiques du liège naturel ou du liège micro-aggloméré.

Un autre objectif de l'invention est de fournir un bouchon en liège enrobé adapté pour ne pas modifier les propriétés organoleptiques de la solution hydro-alcoolique contenue dans le récipient bouché par ledit bouchon en liège enrobé.

L'invention vise en outre un tel bouchon en liège enrobé adapté pour permettre un bouchage hermétique -notamment aux gaz et aux liquides-d'une bouteille en verre.

L'invention vise également et plus particulièrement à proposer un tel bouchon en liège enrobé qui soit compatible avec les contraintes de bouchage de bouteilles de solutions hydro-alcooliques -notamment de vin tranquille, et/ou de vin effervescent et/ou de vin sucrés (de teneur en sucre élevée, notamment de l'ordre de 60 g/L) et acides (pH de l'ordre de 3) et/ou d'alcool fort- sur une chaine d'embouteillage industriel.

En particulier, l'invention vise à proposer un tel bouchon en liège enrobé qui n'adhère pas au flacon -même après un temps de contact prolongé-notamment de plusieurs années- et qui soit susceptible d'être extrait dudit flacon par l'application d'une traction d'intensité modérée.

Pour ce faire, l'invention concerne un dispositif pour le traitement de surface extérieure d'un bouchon en liège comprenant :
- une première composition, dite composition réactive, liquide, comprenant :
   o une composition, dite composition bis-époxydique, d'au moins un composé de masse moléculaire comprise entre 340 g/mol et 800 g/mol et de formule générale (M) suivante ; 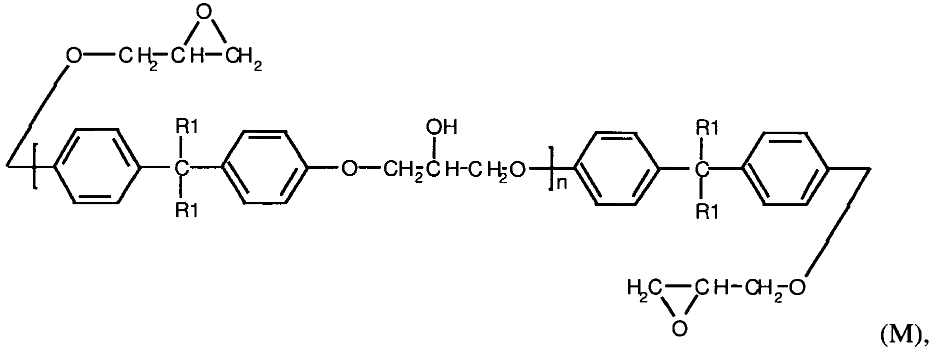 dans laquelle :
      ▪ n est un nombre entier naturel choisi dans le groupe formé de 0, de 1 et de 2, et ;
      ▪ R1 est choisi dans le groupe formé de -H et de -CH₃ ;
   o un solvant, dit solvant réactif, de formule (N) générale ; 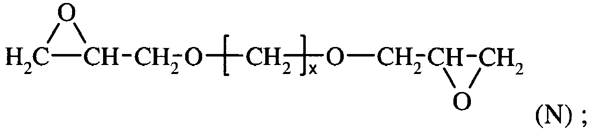
   dans laquelle x est un nombre entier compris entre 2 et 10, en particulier égal à 4 ;
- une deuxième composition, dite composition de durcissement, liquide comprenant au moins une polyamine adaptée pour réagir avec au moins un groupement époxyde de la composition réactive, pour former une liaison covalente entre une fonction amine primaire de ladite polyamine et ledit groupement époxyde, et pour former par polymérisation un film de protection en surface du bouchon en liège ;
   caractérisé en ce que la composition réactive comprend une charge d'un solide à l'état divisé dispersée dans la composition réactive, ledit solide à l'état divisé étant formé de sulfate de baryum à l'état divisé.

Dans toute la suite ;
- le terme « densité » d'une composition est défini comme le rapport, sans unité, de la masse volumique de ladite composition sur la masse volumique de l'eau pure à la température de 4°C ;
- le terme « équivalent époxy » d'un composé désigne le rapport (exprimé en g/mol) entre la masse d'une mole dudit composé et le nombre de mole(s) de fonction chimique époxyde dudit composé ;
- le terme « diamètre moyen » des particules du solide à l'état divisé désigne le diamètre moyen des sphères circonscrivant chacune des particules du solide à l'état divisé. En particulier, dans le cas de particules sensiblement sphériques, le diamètre moyen des particules désigne le diamètre moyen de la sphère définissant les particules.

L'invention concerne donc un dispositif de traitement de surface extérieure d'un bouchon en liège comprenant une composition réactive liquide et d'une composition de durcissement liquide conditionnées séparées l'une de l'autre.

Avantageusement, le solvant réactif de formule (N) est l'éther di-glycidylique du butane-diol de formule (U) suivante ;

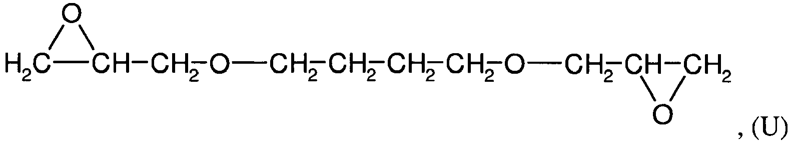

Avantageusement, la charge solide est formée de sulfate de baryum à l'état divisé. Les inventeurs ont observé qu'une telle charge solide est adaptée pour pouvoir présenter une orientation préférentielle dans le film de protection formant barrière et pour assurer la cohésion dudit film de protection. Les inventeurs ont aussi observé qu'une telle charge solide dans la composition réactive d'un dispositif de traitement selon l'invention permet non seulement de former un film de protection en surface d'un bouchon en liège, mais permet aussi d'obtenir un bouchon en liège enrobé présentant sensiblement la couleur et l'aspect du liège naturel.

Les inventeurs ont observé que l'utilisation de sulfate de baryum à l'état divisé comme charge solide dans un dispositif de traitement selon l'invention permet la préparation d'un mélange de traitement présentant à la fois une viscosité faible et adaptée au traitement de bouchons en liège et une excellente qualité de répartition dudit mélange sur les bouchons en liège. En outre, un tel mélange de traitement permet de former en surface des bouchons en liège, un revêtement transparent et incolore et présentant une tenue aux alcools (solutions hydro-alcooliques et/ou alcools forts) améliorée par rapport aux revêtements de l'état de la technique.

Avantageusement et selon l'invention, le solide à l'état divisé est formé de particules de diamètre moyen compris entre 0,7 µm et 4 µm.

Avantageusement et selon l'invention, le dispositif de traitement est adapté pour former, par mélange de la composition réactive liquide et de la composition de durcissement liquide, un mélange de traitement de surface à l'état liquide, de viscosité inférieure à 30 000 mPa.s, notamment comprise entre 5 000 mPa.s et 25 000 mPa.s, de préférence compris entre 10 000 mPa.s et 20 000 mPa.s, idéalement compris entre 1700 mPa.s et 2300 mPa.s.

On mesure la viscosité d'un tel mélange de traitement par tout moyen connu en lui-même de l'homme du métier, notamment un viscosimètre rotationnel de marque RHEOVISCO équipé d'un cylindre n°5 présentant une vitesse de rotation de 50 ou 100 rpm.

Un tel dispositif de traitement est adapté pour pouvoir former, par mélange extemporané de la composition réactive liquide et de la composition de durcissement liquide, un mélange de traitement de surface à l'état liquide, ledit mélange de traitement de surface étant non polymérisé, adapté pour permettre l'enrobage d'un bouchon en liège, la formation d'un film homogène dudit mélange de traitement en surface du bouchon en liège et la formation ultérieure d'un film de protection polymérisé en surface dudit bouchon en liège.

Un tel mélange de traitement de surface d'un bouchon en liège présente un premier état d'application dudit mélange de traitement dans lequel le mélange de traitement est dans un état non polymérisé et présente une viscosité adaptée pour pouvoir former une couche d'enrobage d'un bouchon en liège et un deuxième état de protection dudit mélange de traitement dans lequel le mélange forme un film de protection polymérisé de grande résistance chimique et mécanique en surface dudit bouchon en liège.

Les inventeurs ont observé qu'un tel dispositif de traitement de surface d'un bouchon en liège permet d'obtenir un film de protection qui s'étend en surface du bouchon en liège et qui présente une adhésion et une cohésion avec le bouchon en liège sous-jacent qui sont accrues par rapport à celles des revêtements antérieurs des bouchons en liège.

En outre, un tel bouchon en liège enrobé d'un tel film de protection satisfait aux exigences -notamment des normes européennes (« European Food and Safety Authority »)- de qualité alimentaire relatives aux matériaux plastiques en contact avec les aliments, en particulier à la température ambiante.

Un tel dispositif de traitement permet avantageusement de former en surface du bouchon en liège un film de protection qui est de grande résistance mécanique à l'abrasion, notamment lors de la phase de mise en bouteille et de bouchage des bouteilles, lors de laquelle les bouchons en liège sont malaxés pour permettre leur présentation dans le dispositif de mise en bouteille et de bouchage des bouteilles.

Un tel dispositif de traitement permet aussi de réaliser des bouchons en liège enrobés de grande résistance chimique notamment vis-à-vis des solutions hydro-alcooliques.

En particulier, un tel dispositif de traitement permet de réaliser des bouchons en liège enrobés adaptés pour pouvoir protéger une solution hydro-alcoolique vis-à-vis de la migration des tanins du liège dans ladite solution hydro-alcoolique.

Avantageusement, le composé bis-époxydique de formule (M) de la composition réactive présente au moins l'une des caractéristiques ci-après :
- il est obtenu par polycondensation de bisphénol A et d'épichlorhydrine ;
- il comprend deux groupements hétérocycliques à trois atomes, du type oxirane (époxide), et ;
- il présente une viscosité inférieure à 50 000 mPa.s, notamment comprise entre 5 000 mPa.s et 25 000 mPa.s, en particulier comprise entre 10 000 mPa.s et 20 000 mPa.s, de préférence comprise entre 11 000 mPa.s et 14 000 mPa.s, plus préférentiellement de l'ordre de 11500 mPa.s à la température de 25°C.

Avantageusement, une telle viscosité du composé bis-époxydique de formule (M) de la composition réactive est adaptée pour permettre la formation d'un mélange de traitement de surface extérieure d'un bouchon en liège de faible viscosité avant polymérisation, sans toutefois nécessiter, pour obtenir cette viscosité, l'utilisation d'un solvant susceptible de s'évaporer lors de (et ultérieurement à) la polymérisation.

Avantageusement et selon l'invention, le dispositif de traitement présente au moins l'une des caractéristiques ci-après :
- la composition bis-époxydique présente une proportion massique supérieure à 30 %, notamment comprise entre 30 % et 50 % -en particulier de l'ordre de 40 *%*- dans la composition réactive ;
- le solvant réactif de la composition réactive présente une proportion massique comprise entre 1 % et 10 % -particulièrement sensiblement de l'ordre de 5 *%*- dans la composition réactive ;
- la composition réactive présente une densité comprise entre 1,50 et 1,60 ;
- la composition réactive présente une viscosité inférieure à 10000 mPa.s -notamment comprise entre 4000 mPa.s et 6000 mPa.s- à la température de 25 °C ;
- la composition réactive comprend en outre une proportion massique comprise entre 0,1 % et 1 % -notamment de l'ordre de 0,5 *%*- d'au moins un agent anti-mousse -notamment un agent anti-mousse exempt de silicone- ;
- la composition réactive présente une couleur jaune-clair.

En particulier et avantageusement, la composition réactive d'une formule de traitement selon l'invention comprend une proportion massique comprise entre 35 % et 45 % de composition bis-époxydique, une proportion massique comprise entre 12 % et 18 % d'une composition de flexuosité, une proportion massique comprise entre 2 % et 8 % de solvant réactif, une proportion massique comprise entre 31,5 % et 45,5 % de charge de solide(s) à l'état divisé -notamment de sulfate de baryum-, une proportion massique comprise entre 0,8 % et 1,2 % de silice hydrophobe amorphe à l'état divisé et une proportion massique comprise entre 0,2 % et 0,8 % d'agent anti-mousse. Une telle composition particulière est préférentiellement adaptée pour le traitement d'un bouchon en liège destiné à l'embouteillage d'une composition à teneur élevée en alcool (alcools forts) -notamment en alcool éthylique-.

Dans un mode préférentiel de réalisation, on utilise la résine D.E.R 331 EPOXY RESIN (Dow Chemical, La Plaine Saint Denis, France) à titre de composition bis-époxydique, du Cardolite NC-513 (SPI^{®} Supplies, Paris, France) à titre de composition de flexuosité, de l'Epodil750 (AIR PRODUCTS, Utrecht, Pays-bas) à titre de solvant réactif, du CABOSIL M5 (CABOT, Louvain, Belgique) à titre de silice hydrophobe amorphe à l'état divisé, du BYKA 535 (BYK Chemie GmbH, Wessel, Allemagne) à titre d'agent anti-mousse.

Avantageusement, à titre de composition bis-époxydique, il est possible d'utiliser l'Araldite GY 250 (HUNTSMAN, Bâle, Suisse) et/ou le POLYPOX (EO64 Dow Chemical, La Plaine Saint Denis, France) seuls ou en mélange. Avantageusement, à titre de solvant réactif, il est possible d'utiliser l'Araldite DY-D (HUNTSMAN, Bâle, Suisse) et/ou le POLYPOX R3 (EVONIK Degussa GmbH, Allemagne). Avantageusement, à titre de charge de solide(s) à l'état divisé, il est possible d'utiliser le Blanc Fix Powder Micro ou le Blanc Fix Powder N (Sachtleben Chemie GmbH, Duisbourg, Allemagne) à titre de sulfate de baryum (BaSO₄).

Avantageusement, un dispositif de traitement selon l'invention comprend une composition réactive et une composition de durcissement distinctes et est adapté pour :
- former le mélange de traitement par mélange de la composition réactive et de la composition de durcissement l'une avec l'autre ;
- permettre l'enrobage de la surface extérieure d'un bouchon en liège, et ;
- permettre une stabilisation à température ambiante de la couche d'enrobage formée.

Avantageusement, un dispositif de traitement de surface d'un bouchon en liège selon l'invention présente un état dans lequel la composition réactive et la composition de durcissement sont mélangées l'une avec l'autre pour former un mélange de traitement, ledit mélange de traitement présentant une viscosité adaptée pour permettre un enrobage desdits bouchons par simple contact des bouchons et du mélange de traitement.

Avantageusement et selon l'invention, la composition de durcissement comprend :
o une composition, dite composition de polyamine aliphatique non cyclique, d'au moins une polyamine aliphatique choisie dans le groupe formé de la 2,2,4-triméthyle-hexane-1,6-diamine et de la 2,4,4-triméthyle-hexane-1,6-diamine ;
o une composition, dite composition de polyamines aliphatiques cycliques, d'au moins une polyamine aliphatique cyclique -notamment de la 3-amino-méthyle-3,5,5-triméthyle-cyclohexylamine- ;
o une composition, dite composition de phénalkylamine, formée
   d'au moins un dérivé du cardanol de formule générale (P) suivante ; 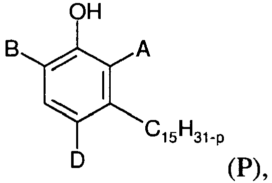 dans laquelle :
   - p est un nombre entier choisi parmi 0, 2, 4 et 6 ;
   - A, B et D sont des groupements choisis indépendamment l'un de l'autre dans le groupe formé de l'hydrogène (H) et des groupements présentant une amine primaire terminale et une chaine principale, reliant le groupement phénol du cardanol et ladite amine primaire terminale, ladite chaine principale étant formée d'un nombre compris entre 5 et 10 d'atomes choisis parmi les atomes de carbone et les atomes d'azote.

De tels dérivés phénylpolyaminoalkyle du cardanol de formule générale (P) sont décrits dans le document EP 1 091 926.

Avantageusement et selon l'invention, la composition de durcissement comprend une proportion massique inférieure à 1 % de 1,2-diamino-éthane de formule (Q) :

NH₂-CH₂-CH₂-NH₂ (Q).

Avantageusement et selon l'invention, la composition de durcissement comprend une proportion massique comprise entre 1 % et 2 % de diéthylène-triamine de formule (R) ;

[H₂N-CH₂-CH₂-]₂NH (R).

Avantageusement et selon l'invention, la composition de durcissement présente au moins l'une des caractéristiques ci-après :
- la composition de polyamines aliphatiques non cycliques présente une proportion massique comprise entre 25 % et 50 % dans la composition de durcissement ;
- la composition de polyamines aliphatiques cycliques présente une proportion massique comprise entre 10 % et 25 % dans la composition de durcissement ;
- la composition de durcissement comprend une proportion massique de para-tert-butyle phénol. Avantageusement, la proportion massique du para-tert-butyle phénol est comprise entre 5 % et 20 % -notamment comprise entre 5 % et 12,5 *%*- dans la composition de durcissement ;
- la composition de durcissement comprend une proportion massique de la composition de phénalkylamine comprise entre 33 % et 43 % ;
- la composition de durcissement présente une densité comprise entre 1,0 et 1,1 ;
- la composition de durcissement présente une viscosité comprise entre 1200 mPa.s et 2200 mPa.s à la température de 25°C.

Avantageusement et selon l'invention, la composition réactive comprend une proportion massique de ladite charge solide comprise entre 10 % et 50 %. Avantageusement, la charge solide est formée de sulfate de baryum dont la proportion massique dans la composition réactive est comprise entre 10 % et 50 %.

Avantageusement, dans une première variante d'un dispositif de traitement selon l'invention, la proportion massique de la charge solide dans la composition réactive est comprise entre 10 % et 20 %. En particulier, la charge solide est formée de sulfate de baryum à l'état divisé. Un mélange de traitement obtenu à partir d'une telle composition réactive est en particulier adapté pour le traitement de bouchon en liège destinés à l'embouteillage de vins tranquilles.

Dans une deuxième variante d'un dispositif de traitement selon l'invention, la proportion massique de la charge solide dans la composition réactive est supérieure à 30 %, notamment comprise entre 30 % et 45 %, en particulier comprise entre 35 % et 40 %, préférentiellement de l'ordre de 38,5 *%*. Un mélange de traitement obtenu à partir d'une telle composition réactive, dans laquelle la charge solide est formée de sulfate de baryum, est en particulier adapté pour le traitement de bouchon en liège destinés à l'embouteillage d'alcools forts.

Avantageusement et selon l'invention, la composition réactive comprend une composition, dite composition de flexuosité, d'au moins un composé liquide de formule générale (S) suivante ; 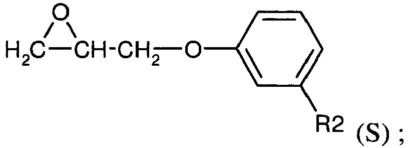 dans laquelle R2 est un groupement hydrocarboné -saturé ou insaturé- comprenant une chaine principale comprenant de 10 à 20 -notamment 15- atomes de carbone.

Avantageusement, la composition de flexuosité de la composition réactive comprend au moins un composé liquide dérivé du cardanol de formule générale (T) suivante ; 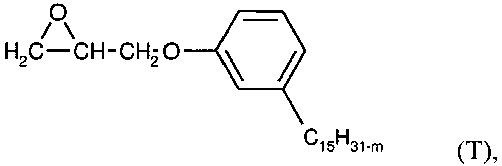 dans laquelle m est un nombre entier choisi parmi 0, 2, 4 et 6.

Avantageusement et selon l'invention, la composition de flexuosité présente au moins l'une des caractéristiques ci-après :
- le composé liquide dérivé du cardanol présente une valeur d'équivalent époxy moyen compris entre 425 et 575 ;
- le composé liquide dérivé du cardanol présente une viscosité comprise entre 40 mPa.s et 70 mPa.s à la température de 25°C.
- le composé liquide dérivé du cardanol présente une proportion massique de l'ordre de 15 % dans la composition réactive.

Avantageusement et selon l'invention, la composition réactive comprend une proportion massique d'une composition, dite composition de diluant, formée du composé liquide dérivé du cardanol et du solvant réactif comprise entre 15 % et 25 % -notamment de l'ordre de 20 *%*-.

Avantageusement et selon l'invention, la composition réactive comprend une proportion massique inférieure à 5 % -notamment de l'ordre de 1 *%-*de silice hydrophobe amorphe à l'état divisé -notamment de la silice modifiée en surface par des groupements polydiméthylesiloxane-. Une telle proportion de silice amorphe à l'état divisé est utilisée pour permettre un contrôle rhéologique de la composition réactive et du mélange de traitement obtenu par mélange de la composition réactive et de la composition de durcissement. Avantageusement, la silice amorphe à l'état divisé est une silice pyrogénée présentant une surface spécifique comprise entre 100 m²/g et 200 m²/g.

Avantageusement et selon l'invention, la composition réactive comprend une proportion massique d'au moins un colorant choisi dans le groupe formé des colorants alimentaires -notamment des colorants alimentaires à base d'au moins un oxyde de titane-. Dans cette variante d'un procédé selon l'invention, il est possible d'apporter volontairement une coloration au revêtement à former en surface de bouchons en liège, ledit revêtement étant, sans apport de colorant alimentaire, parfaitement incolore et transparent.

Dans un mode particulier de réalisation de l'invention, la composition réactive comprend une charge de verre solide à l'état divisé de granulométrie comprise entre 50 µm et 100 µm, notamment de l'ordre de 60 µm. Avantageusement, la composition réactive comprend une proportion massique de ladite charge de verre de l'ordre de 5 %. Avantageusement, on utilise une telle charge de verre dans la composition réactive pour la préparation d'un mélange de traitement de surface de bouchons en liège pour le bouchage d'un vin tranquille, en particulier d'un vin de garde.

L'invention s'étend par ailleurs à un procédé pour le traitement de surface extérieure de bouchon en liège dans lequel :
- on choisit un dispositif de traitement selon l'invention ;
- on forme, par mélange d'une quantité massique de la composition réactive avec une quantité massique de la composition de durcissement, un mélange de traitement, le rapport entre la quantité massique de la composition réactive et la quantité massique de la composition de durcissement dans le mélange de traitement étant compris entre 2 et 10 -de préférence entre 4 et 5-, puis ;

- on réalise une étape d'enrobage des bouchons en liège lors de laquelle on place le mélange de traitement au contact desdits bouchons en liège sous agitation dans un tambour de brassage à température ambiante pendant une durée comprise entre 15 min et 30 min de façon à former des bouchons enrobés, puis ;
- on réalise une étape de polymérisation et de séchage du mélange de traitement en plaçant lesdits bouchons en liège disjoints les uns des autres, à l'air atmosphérique et à température ambiante pendant une durée d'au moins 24 h, et adaptée pour obtenir des bouchons enrobés prêts à l'emploi.

Avantageusement et selon l'invention, lors de l'étape d'enrobage, on place le mélange de traitement au contact desdits bouchons en liège sous agitation dans un tambour de brassage à une température comprise entre 20°C et 30°C -notamment à la température ambiante- pendant une durée comprise entre 15 et 30 min.

Avantageusement et selon l'invention, lors de l'étape de polymérisation et de séchage, on place lesdits bouchons en liège au repos, à l'air atmosphérique et à la température ambiante -notamment comprise entre 10°C et 35°C- pendant une durée de l'ordre de 24 h, lesdits bouchons en liège étant disjoints les uns des autres.

Dans un premier mode de réalisation d'un procédé selon l'invention, avantageusement et selon l'invention, les bouchons en liège étant des bouchons en liège micro-agglomérés destinés au bouchage d'un flacon -notamment une bouteille en verre- contenant un alcool fort -notamment une eau de vie-, on utilise une quantité du mélange de traitement adaptée pour que le rapport de la surface totale exprimée en mètre carré (m²) des bouchons en liège à traiter et de la masse, exprimée en gramme, du mélange de traitement soit compris entre 0,02 et 0,03 -notamment sensiblement de l'ordre de 0,025-.

En particulier, les bouchons en liège étant des bouchons en liège micro-agglomérés destinés au bouchage d'un flacon -notamment une bouteille en verre- contenant un alcool fort -notamment une eau de vie-, lesdits bouchons en liège étant de longueur 29 mm et de diamètre de section droite transversale de 21 mm, on utilise 1000 g du mélange de traitement pour le traitement de 10 000 bouchons en liège.

Dans un deuxième mode de réalisation d'un procédé selon l'invention, avantageusement et selon l'invention, les bouchons en liège étant des bouchons en liège micro-agglomérés destinés au bouchage d'un flacon -notamment une bouteille en verre- contenant un vin tranquille -notamment un vin de garde-, on utilise une quantité du mélange de traitement telle que le rapport de la surface totale, exprimée en mètre carré (m²), des bouchons à traiter et de la masse, exprimée en en gramme, du mélange de traitement soit compris entre 0,2 et 0,3 -notamment sensiblement de l'ordre de 0,25-.

Avantageusement et selon l'invention, préalablement à l'étape de mélange, on ajoute à la composition réactive une proportion massique de l'ordre de 5 % d'une charge de verre à l'état divisé de granulométrie comprise entre 50 µm et 100 µm.

Avantageusement et selon l'invention, après l'étape de polymérisation, on réalise un traitement des bouchons en liège enrobés par une quantité d'au moins un élastomère silicone dans une proportion de 40 g d'élastomère silicone pour 10 000 bouchons en liège enrobés.

L'invention s'étend aussi à un dispositif de traitement d'un bouchon en liège comprenant :
- une quantité d'une composition réactive dans un premier contenant - notamment un premier emballage- ;
- une quantité d'une composition de durcissement dans un deuxième contenant -notamment un deuxième emballage- ;
- une notice d'utilisation du dispositif de traitement et décrivant un procédé selon l'invention.

Avantageusement, le premier et le deuxième contenant de la composition réactive et de la composition de durcissement sont des contenants hermétiquement clos adaptés pour permettre une conservation de la composition réactive et de la composition de durcissement à l'état liquide à l'abri de l'air.

L'invention s'étend aussi à l'utilisation d'un tel dispositif pour le traitement de surface d'un bouchon en liège.

L'invention s'étend aussi à un bouchon en liège enrobé présentant un film de protection extérieur comprenant une charge d'un solide à l'état divisé, ledit solide à l'état divisé étant formé de sulfate de baryum à l'état divisé.

Avantageusement et selon l'invention, le bouchon en liège enrobé requiert pour son extraction d'une bouteille, l'application d'une force orientée selon l'axe d'allongement du goulot de ladite bouteille d'intensité comprise entre 150 N et 500 N (entre environ 15 et 50 kilogramme-force, kgf) -notamment entre 200 N et 400 N (entre environ 20 et 40 kilogramme-force, kgf)-, préconisée pour l'extraction de bouchons de forme et de dimensions différentes.

L'invention s'étend aussi à un bouchon en liège enrobé obtenu par un procédé selon l'invention.

Avantageusement et selon l'invention, le film de protection extérieur du bouchon en liège enrobé est exempt de composé organique volatil.

L'invention concerne également un dispositif de traitement de surface -notamment d'enrobage- d'un bouchon en liège, un procédé d'enrobage d'un bouchon en liège utilisant un tel dispositif de traitement, un kit pour le traitement de surface d'un bouchon en liège et un bouchon en liège enrobé obtenu par un tel procédé, caractérisés en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées représentant un mode de réalisation préférentiel de l'invention, donnés uniquement à titre d'exemples non limitatifs, et dans lesquels :
- la figure 1 est un schéma synoptique d'un procédé d'enrobage de bouchons en liège selon l'invention,
- la figure 2 est une représentation d'un dispositif pour le traitement de bouchons en liège selon l'invention, sous la forme d'un kit de traitement.

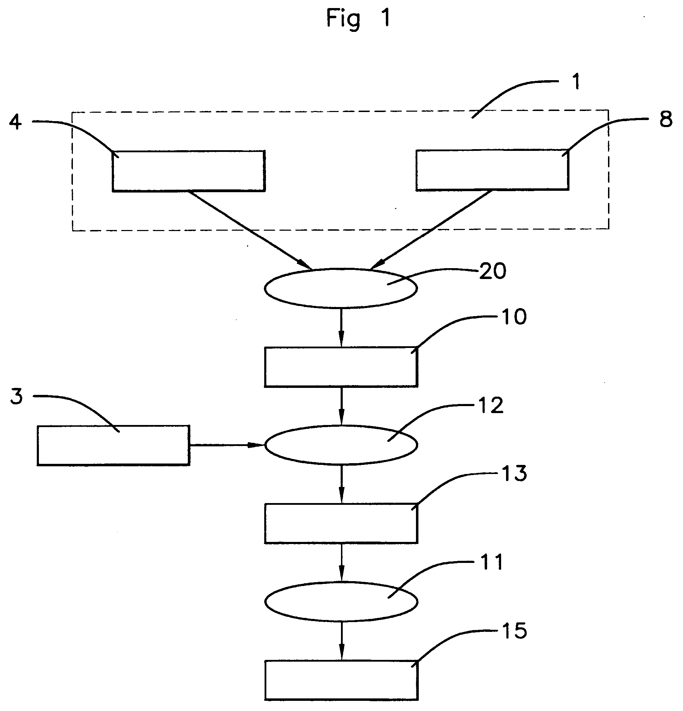

Un procédé de traitement de la surface extérieure de bouchons 3 en liège est décrit en figure 1. Dans un tel procédé, on utilise une composition 1 de traitement de la surface 2 extérieure d'au moins un bouchon 3 en liège selon l'invention. Une telle composition 1 de traitement comprend une composition 4 réactive et une composition 8 de durcissement. Pour le traitement de la surface extérieure de bouchons 3 en liège, on prépare extemporanément un mélange 10 de traitement par mélange 20 d'une quantité de la composition 4 réactive et d'une quantité de la composition 8 de durcissement. On réalise ce mélange 20 à la température ambiante par tout moyen connu, notamment par des moyens mécaniques -par exemple par agitation magnétique, par ultrasons-d'homogénéisation de la composition 4 réactive et de la composition 8 de durcissement.

On applique ensuite, par pulvérisation ou par injection à température ambiante et à pression atmosphérique, le mélange 10 de traitement sur des bouchons 3 en liège naturel ou en liège aggloméré/micro-aggloméré. On réalise cette application dans un tambour rotatif présentant un volume intérieur d'homogénéisation de 20 L à raison de 1000 g de mélange 10 de traitement pour 10 000 bouchons 3 en liège micro-aggloméré de dimensions (21 x 29 mm) destinés à la mise en bouteille d'une eau-de-vie blanche. La vitesse de rotation du tambour autour de son axe de symétrie est de 20 à 25 tpm.

Pour l'enrobage de bouchons 3 en liège destinés à la mise en bouteille d'un vin tranquille -notamment d'un vin de garde- on applique une quantité de 100 g du mélange 10 de traitement.

On réalise une étape 12 d'enrobage des bouchons 3 en liège lors de laquelle on maintient l'homogénéisation pendant une durée comprise entre 15 min et 30 min. On obtient des bouchons 13 en liège enrobés c'est-à-dire présentant une couche du mélange 10 de traitement s'étendant en surface 2 extérieure des bouchons 13 en liège enrobés, ledit mélange 10 de traitement n'étant pas polymérisée. L'épaisseur de la couche de mélange 10 de traitement d'un bouchon destiné à la mise en bouteille d'un vin tranquille -notamment d'un vin de garde- est inférieure à 1 µm.

L'épaisseur de la couche de mélange 10 de traitement d'un bouchon destiné à la mise en bouteille d'une eau-de-vie blanche est inférieure à 10 µm.

On réalise ensuite une étape 11 de polymérisation du mélange 10 de traitement en plaçant les bouchons 13 en liège enrobés à l'air atmosphérique et à la température ambiante (c'est-à-dire sans mise en oeuvre spécifique de moyens de chauffage des bouchons 13 en liège enrobés) pendant une durée de l'ordre de 24 h. On obtient ainsi des bouchons 13 en liège enrobés et présentant un aspect sec au touché. La polymérisation du mélange 10 de traitement est complète au bout d'une durée de l'ordre de 96 h à température ambiante et pression atmosphérique.

On obtient des bouchons 15 en liège prêts à l'emploi qui présentent un film de protection de couleur jaune pâle, d'aspect brillant et lisse et de grande résistance à l'abrasion mécanique.

En outre, les bouchons 15 en liège enrobés d'un tel film de protection satisfont aux exigences -notamment des normes européennes (« European Food and Safety Authority »)- de qualité alimentaire relatives aux matériaux plastiques en contact avec les aliments, en particulier à la température ambiante. En particulier, La valeur de migration spécifique (LMS) du bisphénol A d'un tel bouchon 15 en liège enrobé selon l'invention est inférieure à 0,2 mg de bisphénol A par kilogramme d'aliment tel que réalisé au Laboratoire National de Métrologie et d'Essais (LNE, Trappes, France) selon la norme NF EN 15136.

Les mesures de migration globale réalisées au Laboratoire National de Métrologie et d'Essais (LNE, Trappes, France) selon la norme NF ISO 10106 montrent une valeur de 6 mg/kg qui est inférieure aux limites fixées par la réglementation dans le liquide simulateur représentant les aliments aqueux et alcoolisés jusqu'à 50° (Simulant C de la directive 85/572).

Les mesures de migration des amines aromatiques primaires réalisées au Laboratoire National de Métrologie et d'Essais (LNE, Trappes, France) selon la norme EN 1186-1 montrent une valeur inférieure à 0,002 mg/kg (mg d'aniline par kg d'aliment) qui est inférieure à la limite de détection de 0,01 mg/kg mentionnée dans la Directive n°2002/72/CE.

Les dosages de plomb, cadmium, mercure et chrome réalisés au Laboratoire National de Métrologie et d'Essais (LNE, Trappes, France) selon la Directive 2004/12/CE montrent une teneur de chacun de ces métaux lourd inférieure à 10 mg/kg qui est inférieure à la limite de 100 mg/kg fixée par la réglementation dans la Directive n°2002/72/CE.

Le caractère protecteur d'un tel film de protection est évalué au moyen d'une pluralité de tests standardisés, appelés tests de tenue, décrits ci-après dans lesquels des bouchons en liège d'une longueur de 29 mm et de diamètre de section droite transversale de 21 mm préalablement traités avec un dispositif de traitement selon l'invention sont placés dans un volume d'un liquide.

Selon une première étape d'un test de tenue, deux bouchons 3 en liège enrobés selon l'invention sont placés et maintenus dans un volume de 200 ml d'eau distillée à la température de 100°C pendant 24 heures. On évalue optiquement la coloration de l'eau distillée. A l'issue de cette première étape, l'eau distillée n'apparaît pas sensiblement colorée après contact avec les deux bouchons 3 en liège enrobés selon l'invention.

Selon une deuxième étape d'un test de tenue, deux bouchons 3 en liège enrobés selon l'invention sont placés et maintenus dans un volume de 200 ml d'un liquide hydro-alcoolique formée de 50 % (v/v) d'eau et de 50 % (v/v) d'éthanol à la température ambiante pendant une durée d'au moins un mois. A l'issue de cette deuxième étape, le liquide n'apparaît pas sensiblement coloré.

Selon une troisième étape d'un test de tenue, trois bouchons 3 en liège enrobés selon l'invention sont placés et maintenus dans un volume de 200 ml d'un liquide hydro-alcoolique formé de 50 % (v/v) d'eau et de 50 % (v/v) d'éthanol à la température ambiante pendant une durée d'un mois. A l'issue de cette troisième étape, le liquide hydro-alcoolique n'apparaît pas sensiblement coloré.

Selon une quatrième étape d'un test de tenue, deux bouchons 3 en liège enrobés selon l'invention sont placés et maintenus dans 200 ml d'eau déminéralisée à la température de 60°C à raison de 10 heures par jour pendant une durée d'un mois. A l'issue de cette quatrième étape, l'eau déminéralisée n'apparaît pas sensiblement colorée.

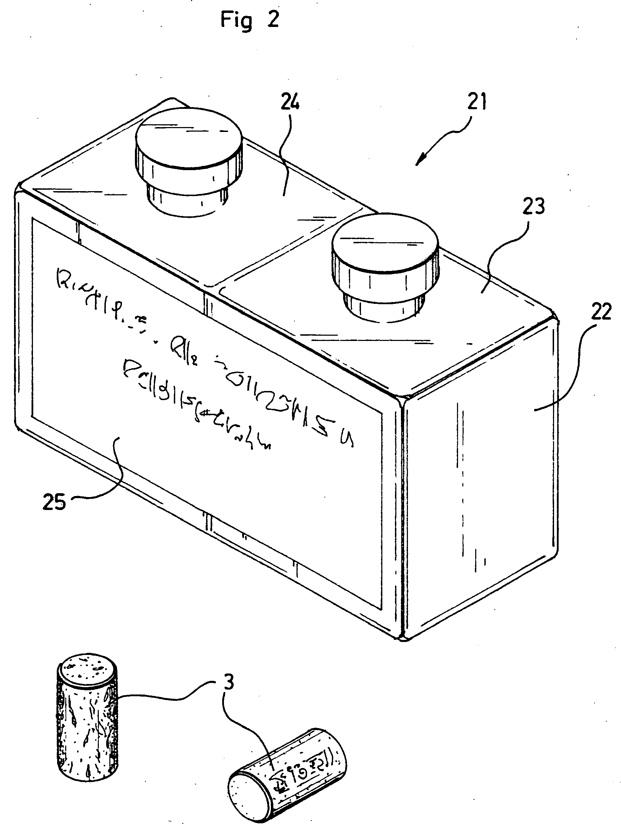

Un dispositif pour le traitement de bouchons 3 en liège est représenté en figure 2. Un tel dispositif de traitement selon l'invention est sous la forme d'un nécessaire 21 de traitement et comprend un emballage 22 adapté pour pouvoir recevoir un premier flacon 23 contenant une quantité d'une composition 4 réactive et un flacon 24 contenant une quantité d'une composition 8 de durcissement. Un tel nécessaire 21 comprend en outre une notice 25 imprimée sur laquelle sont mentionnées les conditions d'utilisation du dispositif de traitement. Une telle notice 25 peut être un imprimé sous la forme d'un feuillet libre placé à l'intérieur de l'emballage 22 ou s'étendre en surface extérieure dudit emballage 22. Dans un tel nécessaire 21 pour le traitement de bouchons 3 en liège, les deux compositions liquides 4 réactive et 5 de durcissement sont conditionnées séparées l'une de l'autre notamment dans deux flacons 23, 24 hermétiquement clos avant la première utilisation.

Dans une première variante non représentée d'un nécessaire 21 selon l'invention, il est possible que le nécessaire 21 comprenne aussi des moyens de dosage et de mélange des deux compositions 4 réactive et 8 de durcissement.

Dans une deuxième variante non représentée d'un nécessaire 21 selon l'invention, il est possible que le nécessaire 21 comprenne aussi des moyens de nettoyage -notamment une composition hydro-alcoolique- adaptés pour permettre la solubilisation du mélange 10 de traitement avant polymérisation et son élimination du tambour rotatif d'homogénéisation et des ustensiles entrés en contact avec le mélange 10 de traitement.

### EXEMPLE 1 - Dispositif de traitement de surface extérieure d'un bouchon en liège

La composition réactive d'un dispositif de traitement de la surface extérieure de bouchon en liège selon l'invention comprend :
- 40 g de résine bis-époxydique liquide (D.E.R. 331 EPOXY RESIN Dow Chemical, La Plaine Saint Denis, France). Une telle résine bis-époxydique liquide est composée d'une pluralité de composés de formule générale (M) dont la valeur moyenne pondérée de n est de 0,15. Une telle résine bis-époxydique présente une valeur d'équivalent époxyde moyen compris entre 425 Da et 575 Da. La viscosité de cette résine bis-époxydique est comprise entre 11 000 mPa.s et 14 000 mPa.s à la température de 25°C. Sa densité à la température de 25°C est de 1,16. La proportion d'épichlorhydrine résiduelle dans la résine bis-époxydique liquide est inférieure à 5 ppm. La durée de conservation de la résine bis-époxydique liquide est de l'ordre de 24 mois ;
- 15 g d'un composé de flexuosité (Cardolite NC 513, SPI Supplies, Paris, France) de faible volatilité. La viscosité de la composition de flexuosité est comprise entre 40 mPa.s et 70 mPa.s, notamment de 50 mPa.s à la température de 25°C. Le poids équivalent époxyde moyen de la composition de flexuosité est compris entre 425 Da et 575 Da notamment de l'ordre de 490 Da. La composition de flexuosité présente une couleur de référence 11 sur l'échelle de Gardner ;
- 5 g de solvant réactif formé de 1,4-bis(2,3-époxypropoxy)butane (1,4-bis(glycidyléther)butanediol) (EPODIL 750, Air Products Chemicals Europe BV, Utrecht, Pays Bas) ;
- 38,5 g de sulfate de baryum solide à l'état divisé (Blanc Fixe, Sachtleben Chemie GmbH, Duisburg, Allemagne) de granulométrie sensiblement comprise entre 0,7 µm et 4 µm ;
- 1 g de silice pyrogénée de qualité alimentaire (CAB-O-SIL TS 720, CABOT Corporation, Louvain, Belgique) ou Tixosil 38AB (Rhodia S.A., Paris la Défense, France) ;
- 0,5 g d'un agent polymère antimousse, dépourvu de silicone (BYK-A 535, BYK Chemie GmbH, Allemagne).

La composition de durcissement d'un dispositif de traitement de la surface extérieure de bouchon en liège selon l'invention comprend :
- 50 g d'un mélange de composés aminés (POLYPOX IH 7016, Dow Chemicals, La Plaine Saint Denis, France), comprenant ;
   o de 25 à 50 g de triméthyle-1,6-hexane-diamine ;
   o de 10 à 25 g de 3-aminométhyle-3,5,5-triméthyle-cyclohexylamine ;
   o de 10 à 20 g de 4-tert-butyle-phénol ;
- 40 g d'une phénalkamine (CardoliteNC-558, SPI Supplies, Paris, France);
- 10 g de POLYPOX H 229 (Dow Chemicals, La Plaine Saint Denis, France).

### EXEMPLE 2 - Procédé de traitement de surface extérieure d'un bouchon en liège

Dans un procédé de traitement de bouchons en liège on réalise successivement les étapes suivantes à la température ambiante, c'est-à-dire à une température comprise entre 10°C et 30°C.

### 1 On prépare dans un premier temps 2 kg d'une composition réactive selon l'invention.

Dans le bol d'un mélangeur planétaire de 5 L (Kenwood), on introduit 800 g ± 10 g de résine bis-époxydique liquide (D.E.R. 331 EPOXY RESIN) puis 10 g ± 0,4 g d'agent polymère antimousse (BYK-A 535). On homogénéise le mélange par agitation rotative du bol en rotation à basse vitesse (vitesse n°3) pendant une durée de 15 min.

A homogénéité, on arrête l'agitation rotative et on incorpore dans le bol du mélangeur planétaire 20 g ± 1 g de silice pyrogénée (CAB-O-SIL TS 720). On reprend l'agitation du mélange à basse vitesse (vitesse n°3) pendant une durée de 15 min.

On arrête l'agitation rotative et on incorpore dans le bol du mélangeur planétaire contenant le mélange 385 g ± 5 g de sulfate de baryum à l'état divisé (Blanc Fixe). On reprend l'agitation du mélange à vitesse moyenne (vitesse n°4-5) pendant une durée de 15 min.

On arrête l'agitation rotative et on incorpore dans le bol du mélangeur planétaire contenant le mélange à nouveau 385 g ± 5 g de sulfate de baryum à l'état divisé (Blanc Fixe). On reprend l'agitation rotative du mélange à vitesse moyenne (vitesse n°4-5) pendant une durée de 30 min.

Sans stopper l'agitation rotative, on introduit dans le bol du mélangeur 150 g ± 2 g de CardoliteNC 513 à titre de composé de flexuosité. On maintient l'agitation rotative du mélange à vitesse moyenne (vitesse n°4) pendant une durée de 15 min.

Sans stopper l'agitation rotative, on introduit dans le bol du mélangeur 150 g ± 2 g de Cardolite NC 513 supplémentaires et on porte l'agitation rotative du mélange à vitesse rapide (vitesse n°5-6) pendant une durée de 15 min.

Toujours sous agitation rapide, on incorpore dans le bol du mélangeur 100 g ± 2 g de POLYPOX R3 à titre de solvant réactif et on maintient cette agitation rapide (vitesse n°5-6) pendant une durée de 30 min.

On arrête l'agitation et on transfère la composition réactive ainsi obtenue dans un récipient de 5 L. On laisse au repos la composition réactive pendant 30 min puis on ferme hermétiquement ledit récipient.

### 2 Par ailleurs, on prépare dans un deuxième temps 500 g d'une composition de durcissement selon l'invention.

Dans un bidon en polyéthylène d'un volume de 5 L, on introduit 250 g ± 2,5 g de POLYPOX IH 7016, 200 g ± 2,0 g de Cardolite NC-558 et 50 g ± 0,5 g de POLYPOX H 229. On homogénéise le mélange par agitation mécanique pendant 3 heures.

### 3 On procède ensuite au satinage des bouchons de liège de la façon suivante.

Dans un seau métallique d'un volume de 2 L, on introduit 1 kg ± 10 g de la composition réactive telle que préparée au point 1 et on ajoute 240 g de la composition de durcissement telle que préparée au point 2. On homogénéise le mélange de traitement ainsi obtenu par agitation mécanique vigoureuse pendant une durée de 3 min.

On introduit 50 bouchons en liège micro-aggloméré de dimensions 29x21 mm dans un tambour rotatif en acier inoxydable. On introduit 5 g du mélange de traitement dans le tambour en rotation à une vitesse de rotation de l'ordre de 20 à 25 rotations par minutes pendant une durée de 30 min. On obtient une répartition homogène du mélange de traitement sur l'ensemble des bouchons en liège. On extrait les bouchons en liège du tambour, et on laisse ceux-ci au repos à l'air libre pendant une durée de 7 jours à la température de 20°C ou pendant une durée de 5 jours à la température de 35°C.

### 4 Evaluation de la qualité des bouchons de liège traités.

On prélève 3 bouchons en liège traités selon le point 3 et on introduit ces bouchons dans une bouteille en verre contenant 200 mL d'une solution hydro-alcoolique (eau/EtOH ; 50/50 ; v/v) incolore. En parallèle, on place à titre de contrôle 3 bouchons en liège micro-aggloméré de dimensions 29x21 mm qui n'ont pas bénéficié d'un traitement selon le point 3.

On observe que la solution hydro-alcoolique de la bouteille contenant les bouchons en liège traités avec le dispositif de traitement selon l'invention reste visuellement incolore au bout d'un délai de 6 mois. En revanche, la solution hydro-alcoolique contenant les bouchons en liège non traités apparait visuellement colorée en jaune après un délai de quelques jours.

### EXEMPLE 3 - Etude comparative de charges de solides à l'état divisé.

Différentes charges solides à l'état divisé ont été étudiées vis-à-vis de leurs propriétés de résistance aux solutions hydro-alcoolique, vis-à-vis de leur propriété rhéologiques dans le mélange de traitement et vis-à-vis de leur viscosité et de leur stabilité. Les résultats sont présentés au tableau 1 ci-après.

De façon totalement inattendue et surprenante, les inventeurs ont découvert qu'un dispositif de traitement comprenant du sulfate de baryum à titre de charge solide à l'état divisé présente une excellente résistance aux solutions hydro-alcooliques, permet de former en surface d'un bouchon en liège un film protecteur non cassant, que le film protecteur obtenu est totalement transparent et incolore et préserve la couleur naturelle du bouchon en liège et que le sulfate de baryum présente une dispersion optimale dans la composition réactive et dans le mélange de traitement.

**Tableau 1**

| Charge | Résistance au mélange Eau/EtOH | Rhéologie dans le mélange de traitement | Autres propriétés |
|---|---|---|---|
| Sulfate de baryum | excellente | Bonne dispersion | |
| Alumine hydratée | moyenne | Bonne dispersion, Thixotrope | |
| Silice non pyrogénée | moyenne | Bonne dispersion, | |
| Silice pyrogénée | moyenne | Bonne dispersion, thixotrope | Agent de prévention de la sédimentation |
| Verre, microsphères | moyenne | Dispersion difficile | Produit cassant au-delà de 20 % |
| Carbonate de calcium | aucune | Bonne dispersion, Mélange stable | Augmentation de la dureté, produit cassant |
| Dolomie | aucune | Bonne dispersion, Augmentation de la viscosité, Sédimentation | |
| Talc | aucune | Bonne dispersion, | Bonnes propriétés mécaniques |

### EXEMPLE 4 - Dispositif de traitement de surface extérieure d'un bouchon en liège

La composition réactive d'un dispositif de traitement de la surface extérieure de bouchon en liège selon l'invention comprend :
- 68 g de résine bis-époxydique liquide (D.E.R. 331 EPOXY RESIN Dow Chemical, La Plaine Saint Denis, France) telle que décrite à l'exemple 1.
- 1 g de silice pyrogénée de qualité alimentaire (CAB-O-SIL M 5, CABOT Corporation, Louvain, Belgique) ou Tixosil 38AB (Rhodia S.A., Paris la Défense, France) ;
- 10 g de sulfate de baryum solide à l'état divisé (Blanc Fixe, Sachtleben Chemie GmbH, Duisburg, Allemagne) de granulométrie sensiblement comprise entre 0,7 µm et 4 µm ;
- 21 g de solvant réactif formé de 1,4-bis(2,3-époxypropoxy)butane (1,4-bis(glycidyléther)butanediol) (POLYPOX R3) ;

La composition de durcissement d'un dispositif de traitement de la surface extérieure de bouchon en liège selon l'invention est telle que décrite à l'exemple 1. On réalise le traitement de bouchons en liège selon le procédé décrit au point 3 de l'exemple 2.

On réalise un test de migration des tanins tel que décrit au point 4 de l'exemple 2. On observe que la solution hydro-alcoolique de la bouteille contenant les bouchons en liège traités avec le dispositif de traitement selon l'invention reste visuellement incolore au bout d'un délai de 6 mois. En revanche, la solution hydro-alcoolique contenant les bouchons en liège non traités apparaît visuellement colorée en jaune après un délai de quelques jours.

### EXEMPLE 5 - Dispositif de traitement de surface extérieure d'un bouchon en liège

La composition réactive d'un dispositif de traitement de la surface extérieure de bouchon en liège selon l'invention comprend :
- 68 g de résine bis-époxydique liquide (D.E.R. 331 EPOXY RESIN Dow Chemical, La Plaine Saint Denis, France) telle que décrite à l'exemple 1.
- 1 g de silice pyrogénée de qualité alimentaire (CAB-O-SIL M5, CABOT Corporation, Louvain, Belgique) ou Tixosil 38AB (Rhodia S.A., Paris la Défense, France) ;
- 16 g de sulfate de baryum solide à l'état divisé (Blanc Fixe, Sachtleben Chemie GmbH, Duisburg, Allemagne) de granulométrie sensiblement comprise entre 0,7 µm et 4 µm ;
- 15 g de solvant réactif formé de 1,4-bis(2,3-époxypropoxy)butane (1,4-bis(glycidyléther)butanediol) (POLYPOX R3) ;

La composition de durcissement d'un dispositif de traitement de la surface extérieure de bouchons en liège selon l'invention est telle que décrite à l'exemple 1. On réalise le traitement de bouchons en liège selon le procédé décrit au point 3 de l'exemple 2.

On réalise un test de migration des tanins tel que décrit au point 4 de l'exemple 2. On observe que la solution hydro-alcoolique de la bouteille contenant les bouchons en liège traités avec le dispositif de traitement selon l'invention reste visuellement incolore au bout d'un délai de 6 mois. En revanche, la solution hydro-alcoolique contenant les bouchons en liège non traités apparait visuellement colorée en jaune après un délai de quelques jours.

## Revendications

1. Dispositif pour le traitement de surface extérieure d'un bouchon (3) en liège comprenant :
- une première composition, dite composition (4) réactive, liquide, comprenant :
∘ une composition, dite composition (5) bis-époxydique, d'au moins un composé de masse moléculaire comprise entre 340 g/mol et 800 g/mol et de formule générale (M) suivante ; 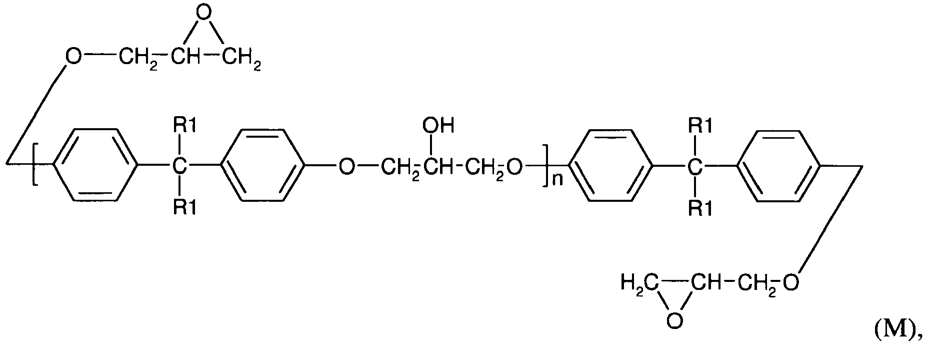 dans laquelle :
▪ n est un nombre entier naturel choisi dans le groupe formé de 0, de 1 et de 2, et ;
▪ R1 est choisi dans le groupe formé de -H et de -CH₃ ;
∘ un solvant, dit solvant réactif, de formule (N) générale suivante ; 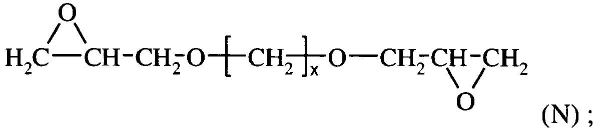
dans laquelle x est un nombre entier compris entre 2 et 10 ;
- une deuxième composition, dite composition (8) de durcissement, liquide comprenant au moins une polyamine adaptée pour réagir avec au moins un groupement époxyde de la composition (4) réactive, pour former une liaison covalente entre une amine primaire de la polyamine et ledit groupement époxyde et pour former par polymérisation un film de protection en surface du bouchon (3) en liège ;
**caractérisé en ce que** la composition (4) réactive comprend une charge d'un solide à l'état divisé dispersée dans la composition (4) réactive, ledit solide à l'état divisé étant formé de sulfate de baryum à l'état divisé.

2. Dispositif selon la revendication 1, **caractérisé en ce que** le solide à l'état divisé est formé de particules de diamètre moyen compris entre 0,7 µm et 4 µm.

3. Dispositif selon l'une des revendications 1 ou 2, **caractérisé en ce qu'**il est adapté pour former, par mélange de la composition (4) réactive liquide et de la composition (8) de durcissement liquide, un mélange (10) de traitement de surface à l'état liquide, de viscosité inférieure à 30 000 mPa.s.

4. Dispositif selon l'une des revendications 1 à 3, **caractérisé en ce que** la composition (8) de durcissement comprend :
∘ une composition, dite composition de polyamine aliphatique non cyclique, d'au moins une polyamine aliphatique choisie dans le groupe formé de la 2,2,4-triméthyle-hexane-1,6-diamine et de la 2,4,4-triméthyle-hexane-1,6-diamine ;
∘ une composition, dite composition de polyamines aliphatiques cycliques, d'au moins une polyamine aliphatique cyclique ;
∘ une composition, dite composition de phénalkylamine, formée d'au moins un dérivé du cardanol de formule générale (P) suivante ; 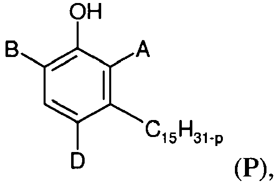 dans laquelle :
- p est un nombre entier choisi parmi 0, 2, 4 et 6 ;
- A, B et D sont des groupements choisis indépendamment l'un de l'autre dans le groupe formé de l'hydrogène (H) et des groupements présentant une amine primaire terminale et une chaine principale, reliant le groupement phénol du cardanol et ladite amine primaire terminale, ladite chaine principale étant formée d'un nombre compris entre 5 et 10 d'atomes choisis parmi les atomes de carbone et les atomes d'azote.

5. Dispositif selon l'une des revendications 1 à 4, caractérisé en ce la composition (4) réactive comprend une proportion massique de ladite charge (7) solide comprise entre 10 % et 50 %.

6. Dispositif selon l'une des revendications 1 à 5, **caractérisé en ce que** la composition (4) réactive comprend une composition, dite composition (6) de flexuosité, d'au moins un composé liquide de formule générale (S) suivante ; 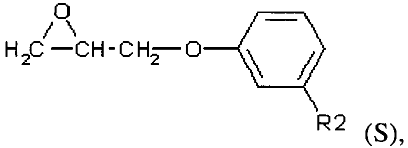 dans lequel R2 est un groupement hydrocarboné comprenant une chaine principale comprenant de 10 à 20 atomes de carbone.

7. Dispositif selon l'une des revendications 1 à 6, **caractérisé en ce que** la composition (4) réactive comprend une proportion massique inférieure à 5 % de silice hydrophobe amorphe à l'état divisé.

8. Dispositif selon l'une des revendications 1 à 7, **caractérisé en ce que** la composition (4) réactive comprend une proportion massique d'au moins un colorant choisi dans le groupe formé des colorants alimentaires.

9. Procédé de traitement de surface extérieure de bouchon (3) en liège dans lequel :
- on choisit un dispositif de traitement selon l'une des revendications 1 à8;
- on forme, par mélange (20) d'une quantité massique de la composition (4) réactive avec une quantité massique de la composition (8) de durcissement, un mélange (10) de traitement, le rapport entre la quantité massique de la composition (4) réactive et la quantité massique de la composition (8) de durcissement dans le mélange (10) de traitement étant compris entre 2 et 10, puis ;
- on réalise un étape (12) d'enrobage des bouchons (3) en liège lors de laquelle on place le mélange (10) de traitement au contact desdits bouchons (3) en liège sous agitation dans un tambour de brassage à température ambiante pendant une durée comprise entre 15 min et 30 min de façon à former des bouchons (13) enrobés , puis ;
- on réalise une étape (11) de polymérisation et de séchage du mélange (10) de traitement en plaçant lesdits bouchons (3) en liège disjoints les uns des autres, à l'air atmosphérique et à température ambiante pendant une durée d'au moins 24 h, et adaptée pour obtenir des bouchons (15) enrobés prêts à l'emploi.

10. Procédé selon la revendication 9, **caractérisé en ce que** les bouchons (3) en liège étant des bouchons (3) en liège micro-agglomérés destinés au bouchage d'un flacon contenant un alcool fort, on utilise une quantité du mélange (10) de traitement adaptée pour que le rapport de la surface totale des bouchons en liège à traiter, exprimée en m², et de la masse, exprimée en gramme, du mélange (10) de traitement soit compris entre 0,02 et 0,03.

11. Procédé selon la revendication 9, **caractérisé en ce que** les bouchons (3) en liège étant des bouchons (3) en liège micro-agglomérés destinés au bouchage d'un flacon contenant un vin tranquille, on utilise une quantité du mélange (10) de traitement adaptée pour que le rapport de la surface totale des bouchons (3) en liège à traiter, exprimée en m², et de la masse de mélange (10) de traitement, exprimée en grammes, soit compris entre 0,2 et 0,3.

12. Procédé selon l'une des revendications 9 à 11, **caractérisé en ce que** préalablement à l'étape de mélange (20), on ajoute à la composition (4) réactive une proportion massique de l'ordre de 5 % une charge de verre à l'état divisé de granulométrie comprise entre 50 µm et 100 µm.

13. Procédé selon l'une des revendications 9 à 12, **caractérisé en ce qu'**après l'étape (11) de polymérisation, on réalise un traitement des bouchons (3) en liège enrobés par une quantité d'au moins un élastomère silicone dans une proportion de 40 g d'élastomère silicone pour 10 000 bouchons (3) en liège enrobés.

14. Bouchon (3) en liège enrobé présentant un film de protection extérieur, **caractérisé en ce que** ledit film de protection extérieur comprend une charge d'un solide à l'état divisé, ledit solide à l'état divisé étant formé de sulfate de baryum à l'état divisé.

15. Bouchon (3) en liège selon la revendication 14, **caractérisé en ce que** le film de protection extérieur est exempt de composé organique volatil.

## Patentansprüche

1. Vorrichtung zur Außenflächenbehandlung eines Korkstöpsels (3), umfassend:
- eine erste Zusammensetzung, genannt flüssige reaktive Zusammensetzung (4), umfassend:
-- eine Zusammensetzung, genannt bis-Epoxidzusammensetzung (5) mit mindestens einer Verbindung mit einem Molekulargewicht zwischen 340 g/mol und 800 g/mol und mit der folgenden allgemeinen Formel (M); 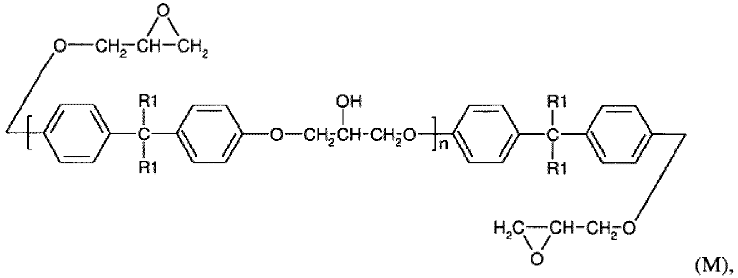 wobei:
--- n eine natürliche ganze Zahl ist, ausgewählt aus der Gruppe, gebildet aus 0, 1 und 2, und;
--- R1 ausgewählt ist aus der Gruppe gebildet aus -H und -CH₃;
-- ein Lösemittel, genannt reaktives Lösemittel mit der folgenden Allgemeinen Formel (N); 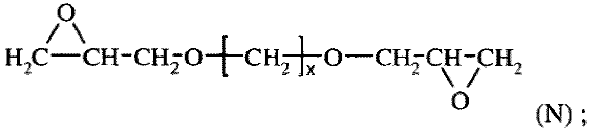
wobei x eine ganze Zahl zwischen 2 und 10 ist;
- eine zweite Zusammensetzung, genannt flüssige Aushärtungszusammensetzung (8), umfassend mindestens ein Polyamin, das ausgelegt ist, um mit mindestens einer Epoxidgruppe der reaktiven Zusammensetzung (4) zu reagieren, um eine kovalente Bindung zwischen einem primären Amin des Polyamins und der Epoxidgruppe zu bilden, und um durch Polymerisierung einen Schutzfilm auf der Fläche des Korkstöpsels (3) zu bilden,
**dadurch gekennzeichnet, dass** die reaktive Zusammensetzung (4) eine Ladung eines Feststoffs im geteilten Zustand umfasst, die in der reaktiven Zusammensetzung (4) verstreut ist, wobei der Feststoff im geteilten Zustand aus Baryumsulfat im geteilten Zustand gebildet ist.

2. Vorrichtung nach Anspruch 1, **dadurch gekennzeichnet, dass** der Feststoff im geteilten Zustand aus Partikeln mit einem mittleren Durchmesser zwischen 0,7 µm und 4 µm gebildet ist.

3. Vorrichtung nach einem der Ansprüche 1 oder 2, **dadurch gekennzeichnet, dass** sie ausgelegt ist, um durch die Mischung der flüssigen reaktiven Zusammensetzung (4) und der flüssigen Aushärtungszusammensetzung (8) eine Mischung (10) zur Flächenbehandlung im flüssigen Zustand mit einer Viskosität von weniger al 30000 mPa.s zu bilden.

4. Vorrichtung nach einem der Ansprüche 1 bis 3, **dadurch gekennzeichnet, dass** die Aushärtungszusammensetzung (8) Folgendes umfasst:
- eine Zusammensetzung, genannt nicht cyclische aliphatische Polyaminzusammensetzung mit mindestens einem aliphatischen Polyamin, ausgewählt aus der Gruppe, gebildet aus 2,2,4-Trimethylhexan-1,6-diamin und 2,2,4-Trimethylhexan-1,6-diamin;
- eine Zusammensetzung, genannt cyclische aliphatische Polyaminzusammensetzung mit mindestens einem cyclischen aliphatischen Polyamin;
- eine Zusammensetzung, genannt Phenylakylaminzusammensetzung, gebildet aus mindestens einem Derivat des Cardanols mit der folgenden allgemeinen Formel (P); 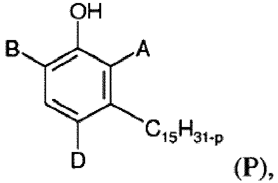 wobei:
- p eine ganze Zahl, ausgewählt aus 0, 2, 4 und 6, ist;
- A, B und D Gruppen sind, unabhängig voneinander ausgewählt aus der Gruppe, gebildet aus Wasserstoff (H) und Gruppen, die ein terminales primäres Amin und eine Hauptkette aufweisen, die die Phenolgruppe des Cardanols und das terminale primäre Amin verbindet, wobei die Hauptkette aus einer Anzahl gebildet ist, die zwischen 5 und 10 Atomen liegt, ausgewählt aus den Kohlenstoffatomen und den Stickstoffatomen.

5. Vorrichtung nach einem der Ansprüche 1 bis 4, **dadurch gekennzeichnet, dass** die reaktive Zusammensetzung (4) ein Massenverhältnis der Feststoffladung (7) umfasst, das zwischen 10 % und 50 % liegt.

6. Vorrichtung nach einem der Ansprüche 1 bis 5, **dadurch gekennzeichnet, dass** die reaktive Zusammensetzung (4) eine Zusammensetzung, genannt Flexuositätszusammensetzung (6), mit mindestens einer flüssigen Verbindung mit der folgenden allgemeinen Formel (S) umfasst; 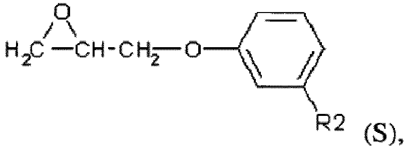 wobei R2 eine Kohlenwasserstoffgruppe ist, umfassend eine Hauptkette mit 10 bis 20 Kohlenstoffatomen.

7. Vorrichtung nach einem der Ansprüche 1 bis 6, **dadurch gekennzeichnet, dass** die reaktive Zusammensetzung (4) ein Massenverhältnis von weniger als 5 % amorphes hydrophobes Siliziumdioxid im geteilten Zustand umfasst.

8. Vorrichtung nach einem der Ansprüche 1 bis 7, **dadurch gekennzeichnet, dass** die reaktive Zusammensetzung (4) ein Massenverhältnis von mindestens einem Farbstoff umfasst, ausgewählt aus der Gruppe, gebildet aus Lebensmittelfarbstoffen.

9. Verfahren zur Außenflächenbehandlung eines Korkstöpsels (3), wobei
- eine Vorrichtung zur Behandlung gemäß einem der Ansprüche 1 bis 8 gewählt wird;
- durch Mischung (20) einer Gewichtsmenge der reaktiven Zusammensetzung (4) mit einer Gewichtsmenge der Aushärtungszusammensetzung (8) eine Mischung (10) zur Behandlung gebildet wird, wobei die Beziehung zwischen der Gewichtsmenge der reaktiven Zusammensetzung (4) und der Gewichtsmenge der Aushärtungszusammensetzung (8) in der Mischung (10) zur Behandlung zwischen 2 und 10 liegt, dann
- ein Schritt (12) des Umhüllens der Korkstöpsel (3) durchgeführt wird, bei dem die Mischung (10) zur Behandlung in Kontakt mit den Korkstöpseln (3) unter Rühren in einer Löttrommel bei Raumtemperatur während einer Dauer zwischen 15 min und 30 min gebracht wird, um umhüllte Stöpsel (13) zu bilden, dann
- ein Schritt (11) des Polymerisierens und des Trocknens der Mischung (10) zur Behandlung durchgeführt wird, indem die Korkstöpsel (3), voneinander getrennt, an der atmosphärischen Luft und bei Umgebungstemperatur während einer Dauer von mindestens 24 Stunden positioniert werden, und ausgelegt, um umhüllte Stöpsel (15) zu erhalten, die zur Verwendung bereit stehen.

10. Verfahren nach Anspruch 9, **dadurch gekennzeichnet, dass** die Korkstöpsel (3) Stöpsel (3) aus mikro-agglomeriertem Kork sind, die ausgelegt sind, um eine Flasche mit starkem Alkohol abzudichten, eine Menge der Mischung (10) zur Behandlung verwendet wird, die dazu ausgelegt ist, dass die Beziehung der gesamten Fläche der Korkstöpsel, die behandelt werden soll, ausgedrückt in m², und der Masse, ausgedrückt in Gramm, der Mischung (10) zur Behandlung zwischen 0,02 und 0,03 liegt.

11. Verfahren nach Anspruch 9, **dadurch gekennzeichnet, dass** die Korkstöpsel (3) Stöpsel (3) aus mikro-agglomeriertem Kork sind, die ausgelegt sind, um eine Flasche mit Stillwein abzudichten, eine Menge der Mischung (10) zur Behandlung verwendet wird, die dazu ausgelegt ist, dass die Beziehung der gesamten Fläche der Korkstöpsel (3), die behandelt werden soll, ausgedrückt in m², und der Masse der Mischung zur Behandlung (10), ausgedrückt in Gramm, zwischen 0,2 und 0,3 liegt.

12. Verfahren nach einem der Ansprüche 9 bis 11, **dadurch gekennzeichnet, dass** vor dem Schritt des Mischens (20) der reaktiven Zusammensetzung (4) ein Massenverhältnis im Bereich von 5 % eine Glasladung im geteilten Zustand mit einer Granulometrie zwischen 50 µm und 100 µm zugegeben wird.

13. Verfahren nach einem der Ansprüche 9 bis 12, **dadurch gekennzeichnet, dass** nach dem Schritt (11) des Polymerisierens eine Behandlung der umhüllten Korkstöpsel (3) durch eine Menge von mindestens einem Silikonelastomer in einem Verhältnis von 40 g Silikonelastomer pro 10000 umhüllter Korkstöpsel (3) durchgeführt wird.

14. Umhüllter Korkstöpsel (3), der einen äußeren Schutzfilm aufweist, **dadurch gekennzeichnet, dass** der äußere Schutzfilm eine Ladung eines Feststoff im geteilten Zustand umfasst, wobei der Feststoff im geteilten Zustand aus Baryumsulfat im geteilten Zustand gebildet ist.

15. Korkstöpsel (3) nach Anspruch 14, **dadurch gekennzeichnet, dass** der äußere Schutzfilm frei von flüchtiger organischer Verbindung ist.

## Claims

1. A device for treating the outside surface of a cork stopper (3), comprising:
- a first liquid composition, named a reactive composition (4), comprising:
∘ a composition, named a bi-epoxy composition (5), of at least one compound having a molecular mass of from 340 g/mol to 800 g/mol and having the following general formula (M): 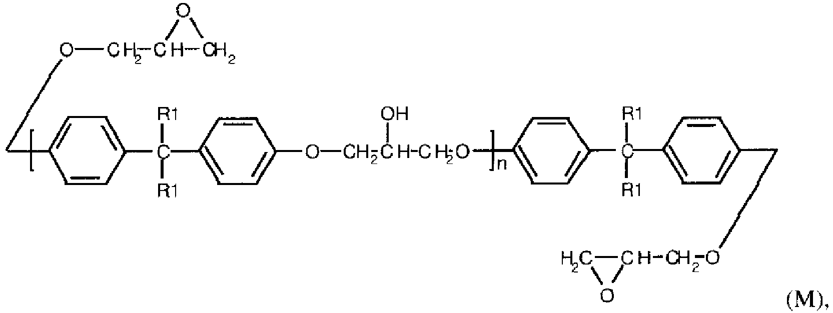 wherein:
▪ n is a natural whole number selected from the group formed of 0, 1 and 2, and
▪ R1 is chosen from the group formed of -H and -CH₃;
∘ a solvent, named a reactive solvent, of the following general formula (N): 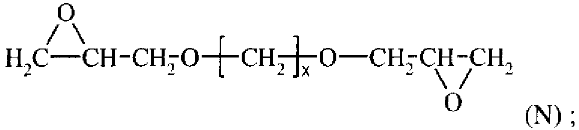
wherein x is a whole number from 2 to 10;
- a second liquid composition, named a curing composition (8), comprising at least one polyamine adapted to react with at least one epoxy group of the reactive composition (4) to form a covalent bond between a primary amine of the polyamine and said epoxy group, and to form, by polymerization, a protective film on the surface of the cork stopper (3);
**characterized in that** the reactive composition (4) comprises a filler of a solid in the divided state dispersed in the reactive composition (4), said solid in the divided state being formed of barium sulfate in the divided state.

2. The device as claimed in claim 1, **characterized in that** the solid in the divided state is formed of particles having a mean diameter of from 0.7 µm to 4 µm.

3. The device as claimed in either claim 1 or claim 2, **characterized in that** said device is adapted to form, by mixing of the liquid reactive composition (4) and the liquid curing composition (8), a surface treatment mixture (10) in the liquid state having a viscosity of less than 30,000 mPa.s.

4. The device as claimed in any one of claims 1 to 3, **characterized in that** the curing composition (8) comprises:
∘ a composition, named a non-cyclic aliphatic polyamine composition, of at least one aliphatic polyamine chosen from the group formed of 2,2,4-trimethyl-1,6-hexanediamine and 2,4,4-trimethyl-1,6-hexanediamine;
∘ a composition, named a cyclic aliphatic polyamine composition, of at least one cyclic aliphatic polyamine;
∘ a composition, named a phenalkylamine composition, formed of at least one cardanol derivative of the following general formula (P): 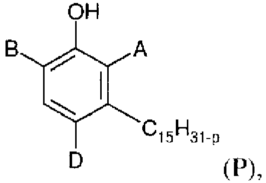 wherein:
- p is a whole number chosen from 0, 2, 4 and 6;
- A, B and D are groups chosen independently of one another from the group formed of hydrogen (H) and groups having a terminal primary amine and a main chain connecting the phenol group of the cardanol and said terminal primary amine, said main chain being formed of a number of from 5 to 10 of atoms chosen from carbon atoms and nitrogen atoms.

5. The device as claimed in any one of claims 1 to 4, **characterized in that** the reactive composition (4) comprises a proportion by mass of said solid filler (7) of from 10% to 50*%.*

6. The device as claimed in any one of claims 1 to 5, **characterized in that** the reactive composition (4) comprises a composition, named a flexibilizing composition (6), of at least one liquid compound of the following general formula (S): 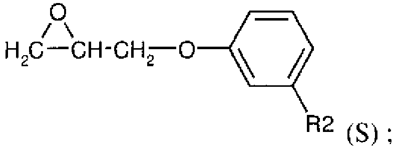 wherein R2 is a hydrocarbon group comprising a main chain having from 10 to 20 carbon atoms.

7. The device as claimed in any one of claims 1 to 6, **characterized in that** the reactive composition (4) comprises a proportion by mass of less than 5% of amorphous hydrophobic silica in the divided state.

8. The device as claimed in any one of claims 1 to 7, **characterized in that** the reactive composition (4) comprises a proportion by mass of at least one colouring chosen from the group formed of food colourings.

9. A method for treating the outside surface of a cork stopper (3), in which:
- a treatment device according to any one of claims 1 to 8 is chosen;
- a treatment mixture (10) is formed by mixing (20) an amount by mass of the reactive composition (4) with an amount by mass of the curing composition (8), the ratio between the amount by mass of the reactive composition (4) and the amount by mass of the curing composition (8) in the treatment mixture (10) being from 2 to 10; and then
- a step (12) of coating the cork stoppers (3) is carried out, in which said cork stoppers (3) are brought into contact with the treatment mixture (10) with agitation in an agitator drum at ambient temperature for a period of from 15 minutes to 30 minutes so as to form coated stoppers (13); then
- a step (11) of polymerization and drying of the treatment mixture (10) is carried out by placing said cork stoppers (3), separately from one another, in atmospheric air and at ambient temperature for a period of at least 24 hours, adapted to obtain coated stoppers (15) that are ready to use.

10. The method as claimed in claim 9, **characterized in that** the cork stoppers (3) being micro-agglomerated cork stoppers (3) for the stoppering of a bottle containing a strong alcohol, there is used an amount of the treatment mixture (10) adapted so that the ratio of the total surface area of the cork stoppers to be treated, expressed in m², and the mass, expressed in grams, of the treatment mixture (10) is from 0.02 to 0.03.

11. The method as claimed in claim 9, **characterized in that** the cork stoppers (3) being micro-agglomerated cork stoppers (3) for the stoppering of a bottle containing a still wine, there is used an amount of the treatment mixture (10) adapted so that the ratio of the total surface area of the stoppers (3) to be treated, expressed in m², and the mass of the treatment mixture (10), expressed in grams, is from 0.2 to 0.3.

12. The method as claimed in any one of claims 9 to 11, **characterized in that** prior to the mixing step (20), a proportion by mass of approximately 5% of a glass filler in the divided state having a particle size of from 50 µm to 100 µm is added to the reactive composition (4).

13. The method as claimed in any one of claims 9 to 12, **characterized in that** after the polymerization step (11), the coated cork stoppers (3) are treated with an amount of at least one silicone elastomer in a proportion of 40 g of silicone elastomer to 10,000 coated cork stoppers (3).

14. A coated cork stopper (3) having an outer protective film, **characterized in that** said outer protective film comprises a filler of a solid in the divided state, said solid in the divided state being formed of barium sulfate in the divided state.

15. The cork stopper (3) as claimed in claim 14, **characterized in that** the outer protective film is free of organic volatile compounds.
